# EUROPEAN PATENT APPLICATION

(11) **EP 4 759 662 A1**
(43) Date of publication of application: **17.06.2026**
(21) Application number: 23948536.0
(22) Date of filing: 10.08.2023
(51) Int. Cl.: B61B 13/00

(54) **UNMANNED CONVEYANCE VEHICLE**

(71) Applicant: Fuji Corporation, Chiryu-shi, Aichi 472-8686 (JP)
(72) Inventor: ODA, Takuya, Chiryu-shi, Aichi 472-8686 (JP); SAWANAMI, Hisato, Chiryu-shi, Aichi 472-8686 (JP); KAWAGUCHI, Koji, Chiryu-shi, Aichi 472-8686 (JP); MAJIMA, Mizuki, Chiryu-shi, Aichi 472-8686 (JP)
(74) Representative: Grünecker Patent- und Rechtsanwälte PartG mbB
(86) International application number: PCT/JP2023/029340
(87) International publication number: WO 2025/032824

(57) **Abstract**

An unmanned conveyance vehicle for conveying a cart includes a vehicle body; a detection section provided in the vehicle body and configured to detect the cart within a predetermined detection range from the vehicle body; an acquisition section configured to acquire multiple search positions including a search start position; and a control section configured to cause the vehicle body to move to the search start position and then execute a search process of searching for the cart by using the detection section, and configured to, when searching for the cart fails at the search start position, repeat causing the vehicle body to move to a next search position among the multiple search positions and executing the search process at the next search position, until searching for the cart succeeds.

## Description

### Technical Field

The present description discloses an unmanned conveyance vehicle.

### Background Art

In the related art, there has been proposed a mobile robot including a camera unit that captures an image of surroundings of the robot, and a drive section provided on a neck or the like and capable of changing a position and an orientation of the camera unit, in which a target object is recognized by a camera, and when the recognition of the target object fails, the target object is searched for while the neck is turned (for example, refer to Patent Literature 1).

### Citation List

### Patent Literature

Patent Literature 1: JP-A-2010-221325

### Summary of the Invention

### Technical Problem

In order to convey a cart placed in a cart storage place by using an unmanned conveyance vehicle, it is required to ensure that the cart can be found regardless of how the cart is placed so that no conveyance omission occurs.

A main object of the present disclosure is to provide an unmanned conveyance vehicle capable of more reliably finding a cart to be conveyed.

### Solution to Problem

The present disclosure employs the following means in order to achieve the above-mentioned main object.

A first unmanned conveyance vehicle of the present disclosure is
an unmanned conveyance vehicle for conveying a cart, the unmanned conveyance vehicle includes:
a vehicle body;
a detection section provided in the vehicle body and configured to detect the cart within a predetermined detection range from the vehicle body;
an acquisition section configured to acquire multiple search positions including a search start position; and
a control section configured to cause the vehicle body to move to the search start position and then execute a search process of searching for the cart by using the detection section, and configured to, when searching for the cart fails at the search start position, repeat causing the vehicle body to move to a next search position among the multiple search positions and executing the search process at the next search position, until searching for the cart succeeds.

In the first unmanned conveyance vehicle of the present disclosure, when searching for the cart fails at the search start position, the unmanned conveyance vehicle repeats moving to the next search position among the multiple search positions and executing the search process, until searching for the cart succeeds. By designating, as multiple search positions, positions at which there is a possibility that a cart is placed, it is possible to more reliably find a nearby cart even when the cart cannot be detected at the search start position.

A second unmanned conveyance vehicle of the present disclosure is
an unmanned conveyance vehicle for conveying a cart, the unmanned conveyance vehicle includes:
a vehicle body;
a detection section provided in the vehicle body and configured to detect the cart within a predetermined detection range from the vehicle body; and
a control section configured to cause the vehicle body to move to a search position that is predetermined and then execute a search process of searching for the cart by using the detection section, and configured to execute, in a case where searching for the cart fails at the search position, a re-search process of changing at least one of an orientation and a position of the vehicle body and searching for the cart by using the detection section.

In the second unmanned conveyance vehicle of the present disclosure, when searching for the cart at the search position fails, the re-search process of changing at least one of the orientation and the position of the vehicle body and searching for the cart by using the detection section is executed. As a result, even when the cart cannot be detected at the search position, it is possible to more reliably find the nearby cart.

### Brief Description of Drawings

Fig. 1 is an external perspective view of multiple caged carts disposed in a cart storage place of a shop or the like and an unmanned conveyance vehicle for conveying the caged carts.
Fig. 2 is an external perspective view of the unmanned conveyance vehicle, a caged cart, and a marker.
Fig. 3 is an external perspective view of the unmanned conveyance vehicle.
Fig. 4 is a side view of the unmanned conveyance vehicle.
Fig. 5 is a side view of the unmanned conveyance vehicle.
Fig. 6 is a view illustrating a state in which the unmanned conveyance vehicle is positioned below the caged cart.
Fig. 7 is a view illustrating a state in which the unmanned conveyance vehicle is coupled to the caged cart.
Fig. 8 is a block diagram of a conveyance system including the unmanned conveyance vehicle and a management device.
Fig. 9 is a flowchart illustrating an example of a conveyance control routine.
Fig. 10 is a flowchart illustrating an example of search line setting processing.
Fig. 11 is a view illustrating an example of a map.
Fig. 12 is a view illustrating an example of a search area, a search line, and search points.
Fig. 13 is a view illustrating another disposition example in which the multiple caged carts are disposed in a cart storage place.
Fig. 14 is a view illustrating another example of the search area, search lines, and the search points.
Figs. 15A and 15B are views illustrating a state of searching for a caged cart.
Fig. 16 is a view illustrating a state of searching for a caged cart when multiple search lines are set in a search area.
Fig. 17 is a flowchart showing an example of a search process.
Fig. 18 is a flowchart showing an example of the search process.
Fig. 19A is a view illustrating a state of searching the front at position x, Fig. 19B is a view illustrating a state of rotating in a CW direction and searching at position x, and Fig. 19C is a view showing a state of rotating in a CCW direction and searching at position x.
Fig. 20A is a view illustrating a state of searching the front at a position behind position x by distance b, Fig. 20B is a view illustrating a state of rotating in the CW direction and searching at the position behind position x by distance b, and Fig. 20C is a view illustrating a state of rotating in the CCW direction and searching at the position behind position x by distance b.
Fig. 21A is a view illustrating a state of searching the front at a position ahead of position x by distance a, Fig. 21B is a view illustrating a state of rotating in the CW direction and searching at the position ahead of position x by distance a, and Fig. 21C is a view illustrating a state of rotating in the CCW direction and searching at the position ahead of position x by distance a.

### Description of Embodiments

Next, an embodiment of the present disclosure will be described with reference to the drawings.

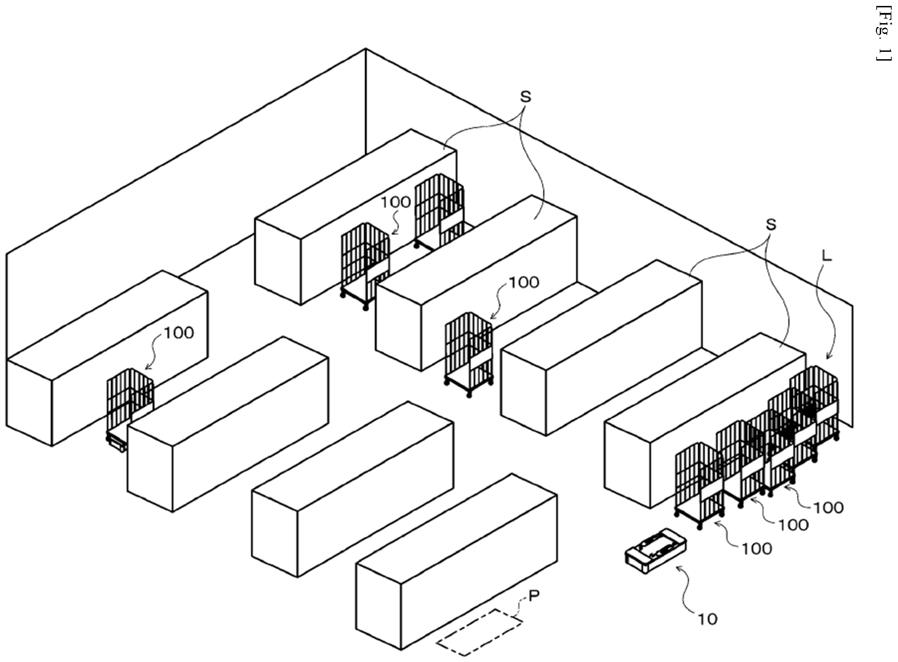

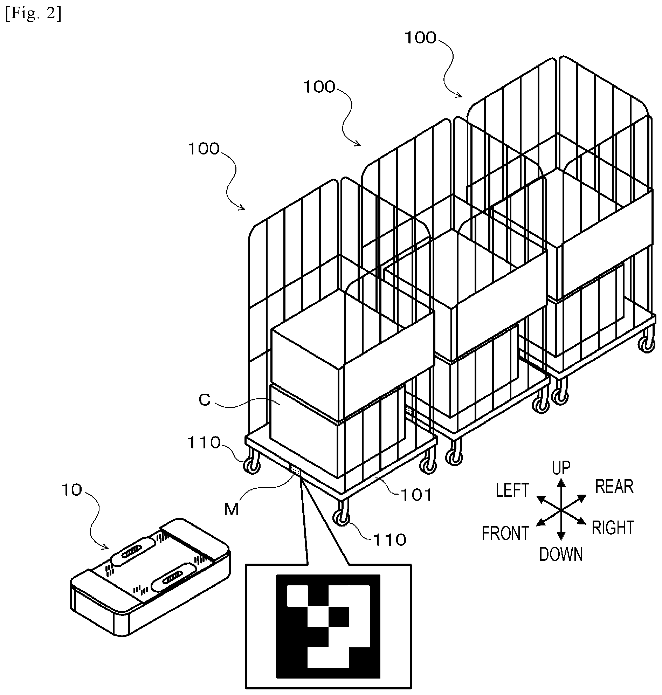

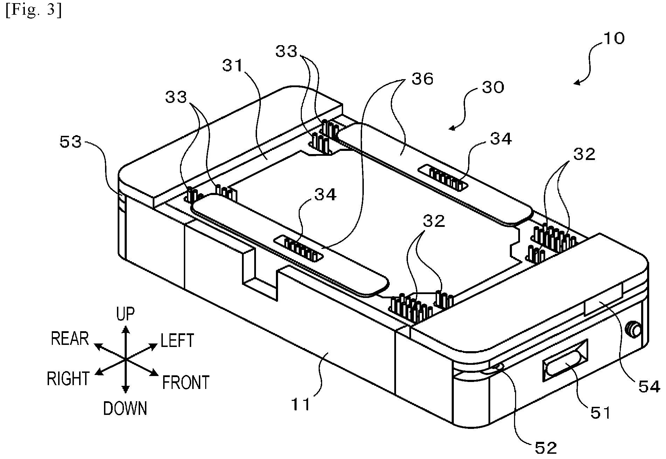

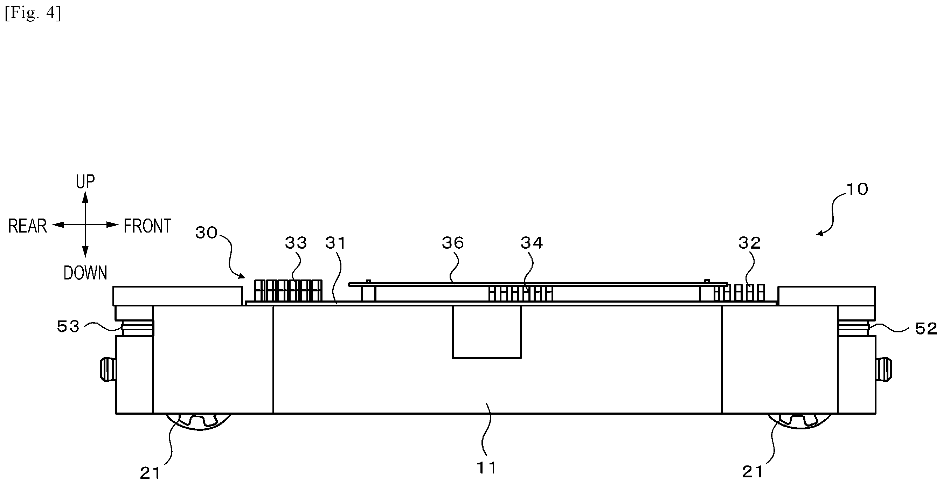

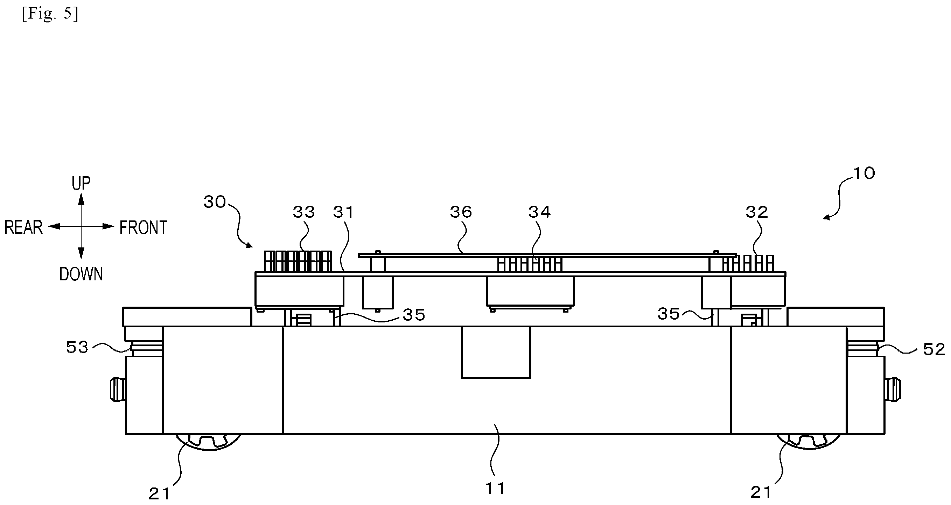

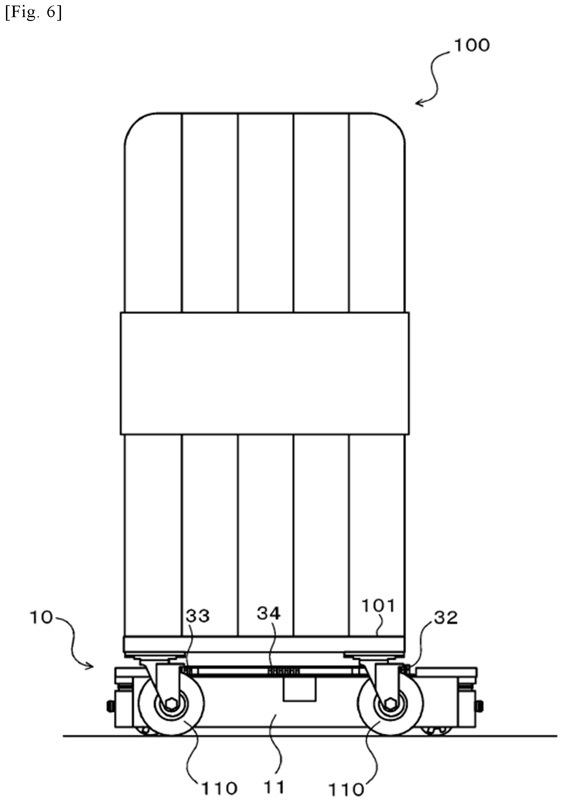

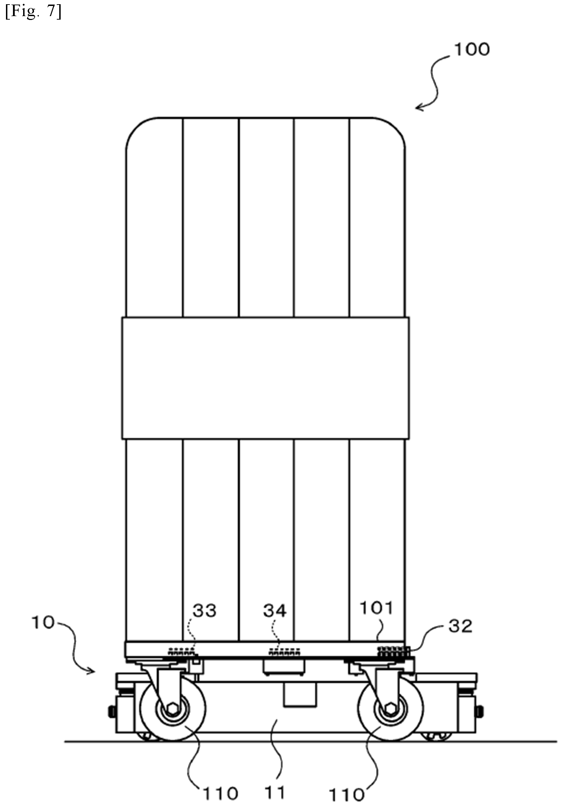

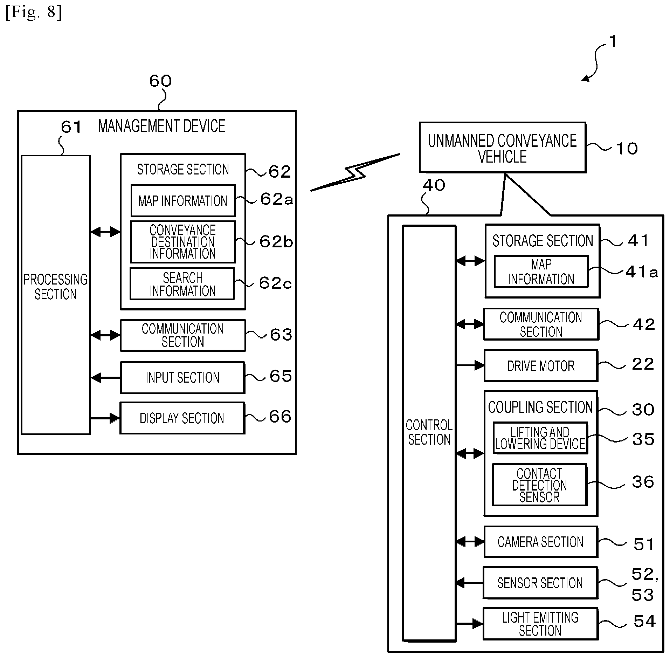

Fig. 1 is an external perspective view of multiple caged carts 100 disposed in cart storage place L of a shop or the like and unmanned conveyance vehicle 10 that conveys caged carts 100. Fig. 2 is an external perspective view of caged carts 100 and unmanned conveyance vehicle 10. Fig. 3 is an external perspective view of unmanned conveyance vehicle 10. Figs. 4 and 5 are side views of unmanned conveyance vehicle 10. Fig. 6 is a view illustrating a state in which unmanned conveyance vehicle 10 is positioned below caged cart 100. Fig. 7 is a view illustrating a state in which unmanned conveyance vehicle 10 is coupled to caged cart 100. Fig. 8 is a block diagram of conveyance system 1 including unmanned conveyance vehicle 10 and management device 60.

As illustrated in Fig. 1, conveyance system 1 of the present embodiment is used in a distribution center, a warehouse, a shop, or the like having multiple shelves S, and includes one or multiple unmanned conveyance vehicles 10 and management device 60 (see Fig. 8) that manages an operation of unmanned conveyance vehicles 10. Unmanned conveyance vehicle 10 is an autonomous mobile robot (AMR) that is coupled to caged cart 100 to convey caged cart 100 to designated shelf S and can travel autonomously.

For example, as illustrated in Fig. 2, caged cart 100 includes rectangular and net-like loading platform portion 101 on which article C can be loaded, and multiple (four) casters 110 turnably attached to four corners of a lower surface of loading platform portion 101. Marker M such as an AR marker, a two-dimensional code, or a barcode for identifying caged cart 100 is provided on loading platform portion 101 of caged cart 100 (in the present embodiment, a central portion of an outer edge front end surface of loading platform portion 101). By reading marker M, unmanned conveyance vehicle 10 recognizes a type of caged cart 100 (conveyance target cart) to be conveyed and a type of article C loaded on loading platform portion 101. Marker M may be attached to article C loaded on loading platform portion 101. Identification information for recognizing caged cart 100 and article C is not limited to marker M. For example, the identification information may be a unique ID for identifying caged cart 100. The identification information may be identification information (text, pictures, or the like) written on an outer box of article C.

As illustrated in Fig. 3, unmanned conveyance vehicle 10 of the present embodiment has a flat rectangular parallelepiped appearance with a low height. Unmanned conveyance vehicle 10 includes vehicle body portion 11, multiple (for example, four) wheels 21 rotatably attached to a bottom surface of vehicle body portion 11, and multiple (for example, four) drive motors 22 (see Fig. 8) that rotationally drive corresponding wheels 21. In the present embodiment, multiple wheels 21 are configured as mecanum wheels including multiple rollers rotatable around axes inclined by 45 degrees with respect to a rotation axis of the wheel on an outer periphery of the wheel. Unmanned conveyance vehicle 10 can move vehicle body portion 11 in all directions or make vehicle body portion 11 turn (such as a spin turn, a pivot turn, or a power turn) by controlling rotation directions and rotation speeds of corresponding wheels 21 independently of each other with multiple drive motors 22. Multiple wheels 21 may also be configured as omni wheels including multiple rollers that are rotatable around axes three-dimensionally intersecting the rotation axis of the wheel. In other words, multiple wheels 21 may be any type of wheel as long as the wheels are capable of moving or turning vehicle body portion 11 in multiple directions.

As illustrated in Figs. 3 to 5, unmanned conveyance vehicle 10 includes coupling section 30 that is provided on an upper surface of vehicle body portion 11 and can be coupled to caged cart 100 in a state in which vehicle body portion 11 is positioned below caged cart 100. Coupling section 30 includes flat plate-shaped lifting and lowering plate 31, coupling pins 32, 33, and 34 provided to extend upward with respect to lifting and lowering plate 31, and lifting and lowering device 35 that lifts and lowers lifting and lowering plate 31. Lifting and lowering plate 31 has a left-right width substantially equal to a left-right width of vehicle body portion 11 and a front-rear width slightly shorter than a front-rear width of vehicle body portion 11 to cover the upper surface of vehicle body portion 11. Coupling pin 32 is provided at a front portion of lifting and lowering plate 31, coupling pin 33 is provided at a rear portion of lifting and lowering plate 31, and coupling pin 34 is provided at an intermediate portion between the front portion and the rear portion of lifting and lowering plate 31. As illustrated in Figs. 6 and 7, coupling section 30 lifts lifting and lowering plate 31 by using lifting and lowering device 35 in a state in which vehicle body portion 11 is positioned below caged cart 100, whereby at least one of coupling pins 32, 33, and 34 engages with an underside of loading platform portion 101 of caged cart 100. Accordingly, unmanned conveyance vehicle 10 and caged cart 100 are coupled to each other, and unmanned conveyance vehicle 10 can convey (tow) caged cart 100.

As illustrated in Figs. 3 to 5, contact detection sensors 36 (spring sensors) for detecting that coupling section 30 (coupling pins 32, 33, and 34) is in contact with (coupled to) loading platform portion 101 of caged cart 100 are provided on both left and right sides of lifting and lowering plate 31. Contact detection sensor 36 includes a plate that is biased upward by a spring, with its upper end positioned at approximately the same height as coupling pins 32, 33, and 34 with respect to lifting and lowering plate 31. When coupling pins 32, 33, and 34 are engaged with loading platform portion 101 of caged cart 100, the plate of contact detection sensor 36 comes into contact with loading platform portion 101, and is lowered relative to coupling pins 32, 33, and 34 while the spring is compressed. Contact detection sensor 36 detects that coupling section 30 is in contact with (coupled to) loading platform portion 101 of caged cart 100 by detecting a state in which the plate is relatively lowered.

Furthermore, as illustrated in Fig. 8, unmanned conveyance vehicle 10 includes control section 40 responsible for overall control, storage section 41 that stores various information including map information 41a, communication section 42 for performing communication (wireless communication) with management device 60, camera section 51 as an imaging device, sensor sections 52 and 53, and light emitting section 54 that illuminates an area forward of vehicle body portion 11. Camera section 51 is installed on a front surface of vehicle body portion 11 to recognize an area forward of vehicle body portion 11. Sensor sections 52 and 53 are installed on the front surface and a rear surface of vehicle body portion 11 to detect surrounding objects. Sensor sections 52 and 53 detect surrounding objects and a distance to the objects. In the present embodiment, as sensor sections 52 and 53, a light detection and ranging (LiDAR) sensor, which scans the surrounding area with laser light, receives each reflected light, and measures a time until the reflected light is received, thereby measuring distance data for each scanning angle and obtaining two-dimensional point cloud data on the surrounding area, is used. Light emitting section 54 is installed on the front surface of vehicle body portion 11, and illuminates a forward area to make it easier for camera section 51 to recognize the surrounding objects in dark environments.

Control section 40 is configured as a microprocessor centered on CPU, and includes ROM storing a processing program, RAM temporarily storing data, a timing section, and the like in addition to the CPU. As illustrated in Fig. 8, an image signal from camera section 51, a detection signal from sensor sections 52 and 53, a detection signal from contact detection sensor 36, and the like are input to control section 40. Control section 40 outputs a control signal to drive motor 22, a control signal to lifting and lowering device 35, and the like.

As illustrated in Fig. 8, management device 60 includes processing section 61, storage section 62, and communication section 63 for performing communication (wireless communication) with each unmanned conveyance vehicle 10. Input section 65 (a mouse, a keyboard, or the like), display section 66 (a liquid crystal display, an organic EL display, or the like), a printer, or the like is connected to management device 60. Processing section 61 is configured as a microprocessor centered on CPU, and includes ROM storing a processing program, RAM temporarily storing data, and the like in addition to the CPU. Storage section 62 is a storage such as an HDD or an SSD, and storage section 62 stores various information such as map information 62a and conveyance destination information 62b.

Conveyance destination information 62b is information in which a type of an article and a conveyance destination of the article are associated with each other, and is registered in advance by an operator. Further, management device 60 creates unique marker M for each type of article according to an instruction of the operator, and prints (issues) created marker M by using the printer. Then, the operator attaches printed marker M to a designated position of caged cart 100 or the article loaded on caged cart 100. Accordingly, unmanned conveyance vehicle 10 can recognize a type of an article to be conveyed by reading marker M with camera section 51, and can acquire a conveyance destination (destination) of caged cart 100 (conveyance target cart) loaded with the article based on the recognized type of the article.

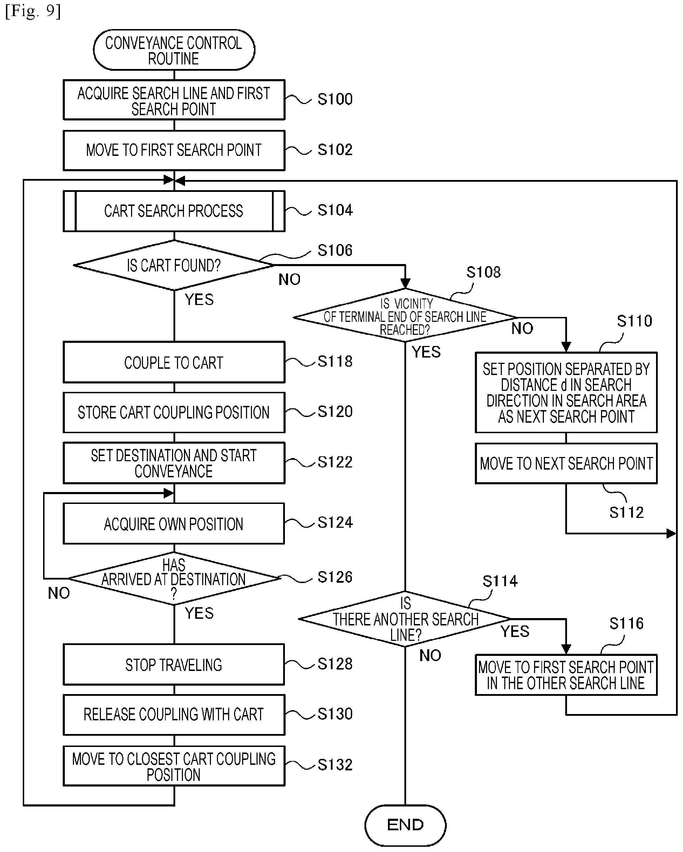

Next, an operation of conveyance system 1 of the present embodiment configured in this manner will be described. In particular, as illustrated in Fig. 1, the operation of unmanned conveyance vehicle 10 when conveying multiple caged carts 100 disposed in cart storage place L one by one to each conveyance destination will be described. Fig. 9 is a flowchart illustrating an example of a conveyance control routine executed by control section 40 of unmanned conveyance vehicle 10. This process is executed when management device 60 instructs the conveyance of caged cart 100 (article).

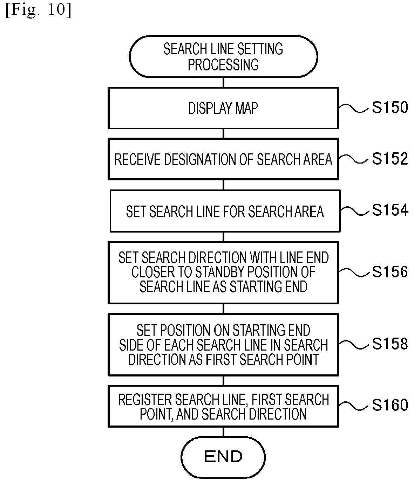

When the conveyance control routine is executed, control section 40 first acquires a search line set in advance in cart storage place L or a first search point on the search line (S100), and controls drive motor 22 such that unmanned conveyance vehicle 10 moves to the acquired first search point (S102). The search line is set in advance by executing search line setting processing by using processing section 61 (CPU) of management device 60. Fig. 10 is a flowchart illustrating an example of search line setting processing. Hereinafter, the description of the conveyance control routine is interrupted, and the search line setting processing will be described.

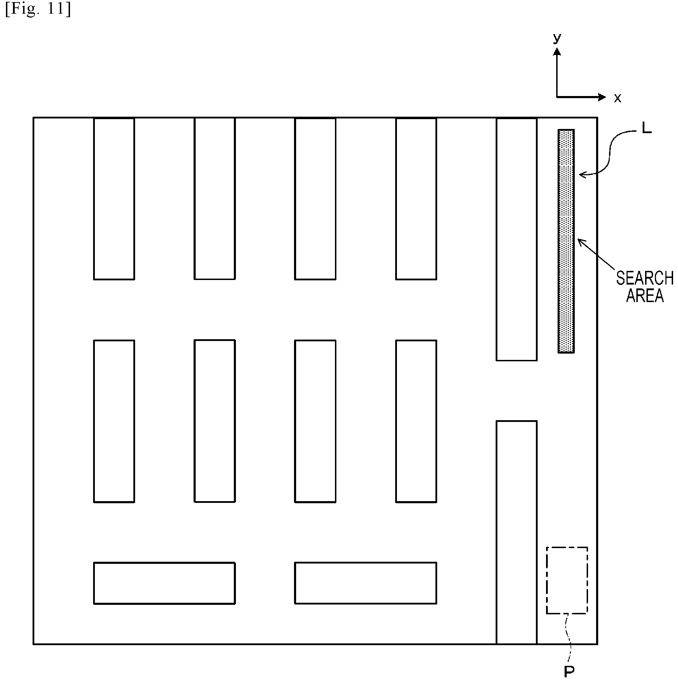

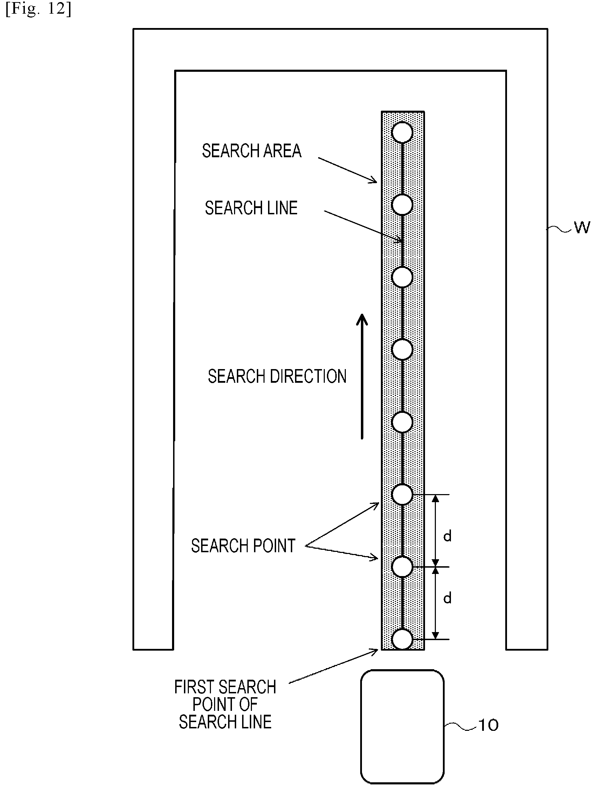

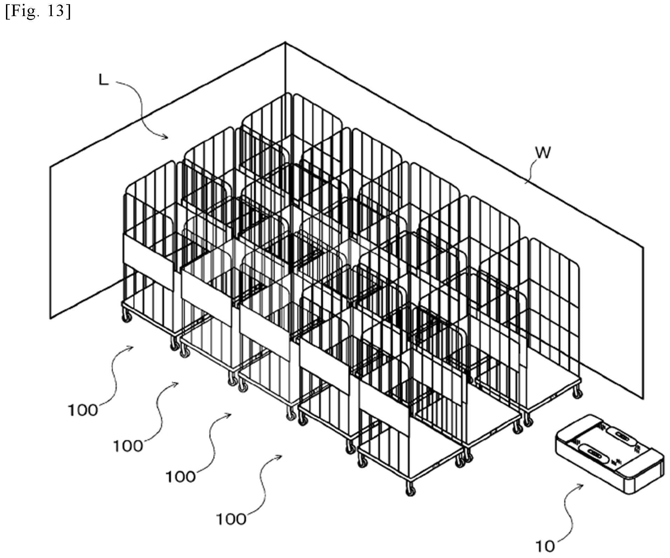

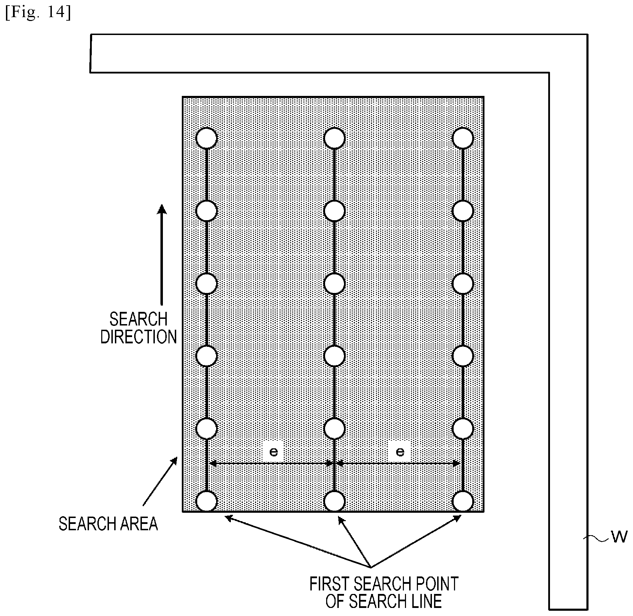

In the search line setting processing, processing section 61 of management device 60 first displays a map (S150) and receives designation of a search area on the map (S152). Fig. 11 shows an example of the map. An operator operates input section 65 (mouse) to designate a rectangular search area at a certain position and size on the map. For example, the operator operates input section 65 to designate two points on the map, thereby designating a rectangular search area having the two points as diagonal points. Subsequently, processing section 61 sets a search line for the received search area (S154). As shown in Fig. 12, the search line is set in the search area to extend in a longitudinal direction of the search area. Further, multiple search lines are set to be arranged in a width direction according to a width of the search area. For example, as illustrated in Figs. 13 and 14, in a case where caged carts 100 are disposed in three rows in cart storage place L, by designating a rectangular search area to include a region in which the three rows of caged carts 100 are disposed, three search lines arranged in the width direction with predetermined width e are set in the search area.

Next, processing section 61 sets, in each search line, a direction from a starting end to a terminal end as a search direction, the starting end being a first line end closer to standby position P (for example, a charging position where unmanned conveyance vehicle 10 can be charged) of unmanned conveyance vehicle 10 on the map, the terminal end being a second line end (S156). Subsequently, processing section 61 sets the position on the starting end side of each search line in the search direction as the first search point (S158). Then, processing section 61 registers search information 62c including the search line, the search direction, and the first search point in storage section 62 (S160), and ends the search line setting processing. When search information 62c is registered, processing section 61 transmits search information 62c to control section 40 of unmanned conveyance vehicle 10. The search line setting processing has been described above.

Returning to the conveyance control routine, when moving to the first search point, control section 40 executes a cart search process of searching for nearby caged cart 100 at the search point (S104), and determines whether caged cart 100 is found (S106). The search for caged cart 100 (cart search process) is performed, for example, by capturing an image of the surroundings of vehicle body portion 11 by using camera section 51, processing the captured image, and determining whether marker M attached to caged cart 100 can be recognized. Control section 40 determines that caged cart 100 is found when the recognition of marker M succeeds, and determines that caged cart 100 is not found when the recognition of marker M fails. Details of the cart search process will be described later.

When it is determined that caged cart 100 cannot be found, control section 40 acquires its own position (current position) and determines whether the vicinity of the terminal end of the search line has been reached (a distance from the current position to the terminal end of the search line is less than interval d described later) (S108). The own position is acquired by obtaining information on a shape of the surroundings based on point cloud data measured by sensor sections 52 and 53 (LiDAR), and comparing (collating) the obtained shape of the surroundings with map information 41a stored in storage section 41 to recognize the current location of the vehicle. When it is determined that the vicinity of the terminal end of the search line has not been reached, control section 40 sets a position separated by distance d in the search direction on the search line as a next search point (S110), moves to the next search point (S112), returns to S104, and executes the cart search process at the next search point.

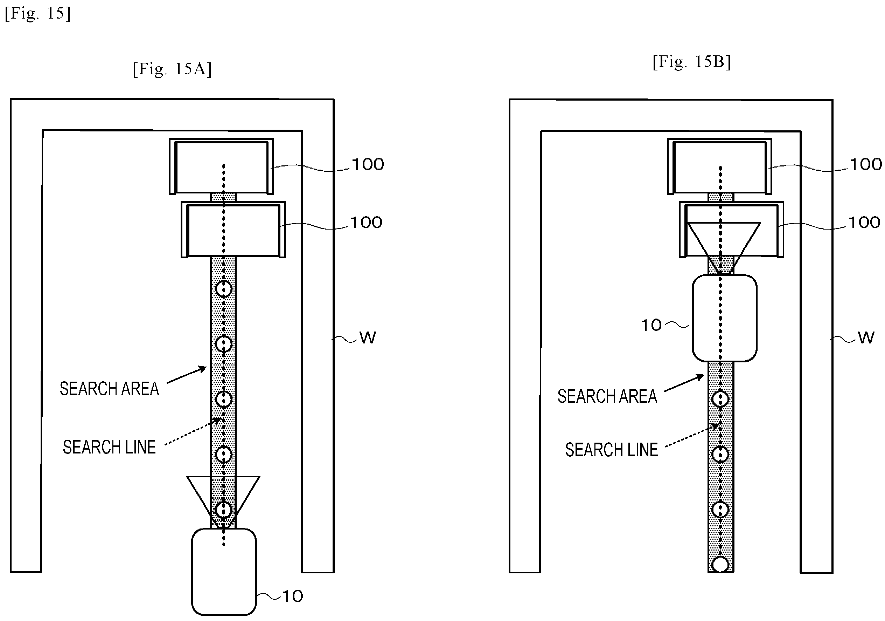

Figs. 15A and 15B are views illustrating a state of searching for caged cart 100. As illustrated in Figs. 15A and 15B, unmanned conveyance vehicle 10 searches for caged cart 100 by subsequently moving to a position separated by interval d in the search direction along the search line (next search point) and executing the cart search process until finding caged cart 100 or reaching the vicinity of the terminal end of the search line. Interval d is determined based on a range that can be searched by camera section 51. Accordingly, it is possible to more reliably find caged cart 100 disposed in the search area. Since the operator needs only to designate the search area on the map, the operator can cause unmanned conveyance vehicle 10 to search for caged cart 100 with a simple operation.

When it is determined in S108 that the vicinity of the terminal end of the search line has been reached, control section 40 determines whether there is another search line to be searched (S114). When it is determined that there is another search line to be searched, control section 40 moves to the first search point of the other search line (S116), returns to S104, and executes the cart search process.

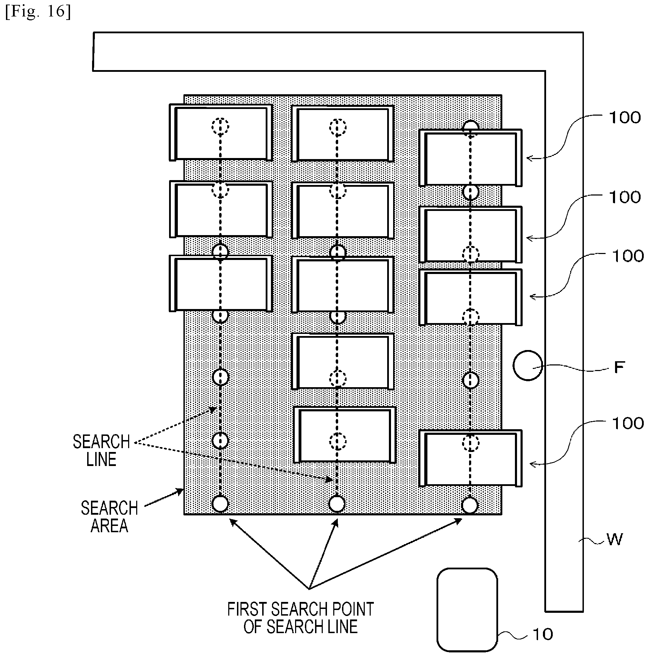

Fig. 16 is a view illustrating a state of searching for caged cart 100 when multiple search lines are set in the search area. As illustrated, when unmanned conveyance vehicle 10 reaches the vicinity of the terminal end of one search line, unmanned conveyance vehicle 10 moves backward along the one search line and moves to the first search point of another search line that has not yet been searched among the multiple search lines. Then, unmanned conveyance vehicle 10 searches for caged cart 100 by subsequently moving to a position separated by interval d in the search direction along the other search line (next search point) and executing the cart search process until finding caged cart 100 or reaching the vicinity of the terminal end of the other search line. Accordingly, caged cart 100 disposed in multiple rows can be more reliably found. In addition, since multiple search lines corresponding to the width of the search area are set only by designating the search area on the map, the operator can cause unmanned conveyance vehicle 10 to search for caged cart 100 with a simple operation.

When it is determined in S104 that caged cart 100 is found, control section 40 is coupled to caged cart 100 (conveyance target cart) (S118). This processing is performed as follows. That is, control section 40 first recognizes two casters 110 of the conveyance target cart by using sensor section 52. Subsequently, control section 40 causes drive motor 22 to be positioned below the conveyance target cart from between recognized two casters 110. Next, control section 40 causes coupling pins 32, 33, and 34 to be lifted by lifting and lowering device 35 to engage with loading platform portion 101 of the conveyance target cart, thereby being coupled to the conveyance target cart.

When being coupled to the conveyance target cart, control section 40 acquires the own position and stores the acquired own position in storage section 41 as a cart coupling position (S120). Then, control section 40 sets a destination and starts conveying the conveyance target cart (S122). The destination is set by recognizing the type of article C to be loaded on the conveyance target cart from recognized marker M, acquiring a conveyance destination of article C corresponding to the recognized type of article C, and setting the destination. The conveyance destination is acquired by receiving the conveyance destination derived from conveyance destination information 62b based on the recognized type of article C from management device 60. The conveyance target cart is conveyed by acquiring a conveyance route and controlling drive motor 22 such that the conveyance from cart storage place L to the destination according to the acquired conveyance route is started. The conveyance route is acquired by recognizing the current location of the vehicle and searching for the route based on map information 41a based on the recognized current location and the designated destination. In the acquisition of the conveyance route, the current location may be recognized and transmitted to management device 60, and the conveyance route generated by management device 60 based on the current location may be received.

When the conveyance of the conveyance target cart is started, control section 40 acquires its own position (S124) and determines whether the destination has been arrived at (S126). When control section 40 determines that the destination has not been arrived at, control section 40 returns to S124, and when control section 40 determines that the destination has been arrived at, control section 40 stops traveling (S128) and releases the coupling with the conveyance target cart (S130). Then, control section 40 moves to the closest cart coupling position among the cart coupling positions stored in S120 (S132), and then returns to S104. Accordingly, it is possible to sequentially find multiple caged carts 100 arranged in cart storage place L and convey caged carts 100 to respective conveyance destinations.

When it is determined in S104 that caged cart 100 cannot be found after executing the cart search process, and it is determined in subsequent S106 and S114 that the vicinity of the terminal end of the search line has been reached and there is no other search line to be searched, control section 40 determines that caged cart 100 to be conveyed does not remain in cart storage place L, and ends the conveyance control routine. In this way, the search line is set in the search area designated in advance for cart storage place L, and caged cart 100 is searched for along the search line. Accordingly, it is possible to more reliably find and convey multiple caged carts 100 disposed in the search area. As illustrated in Fig. 16, even when obstacle F is installed in cart storage place L and multiple caged carts 100 arranged in the search direction are disposed away from each other to avoid obstacle F, unmanned conveyance vehicle 10 can reliably find caged cart 100 by subsequently searching along the search line.

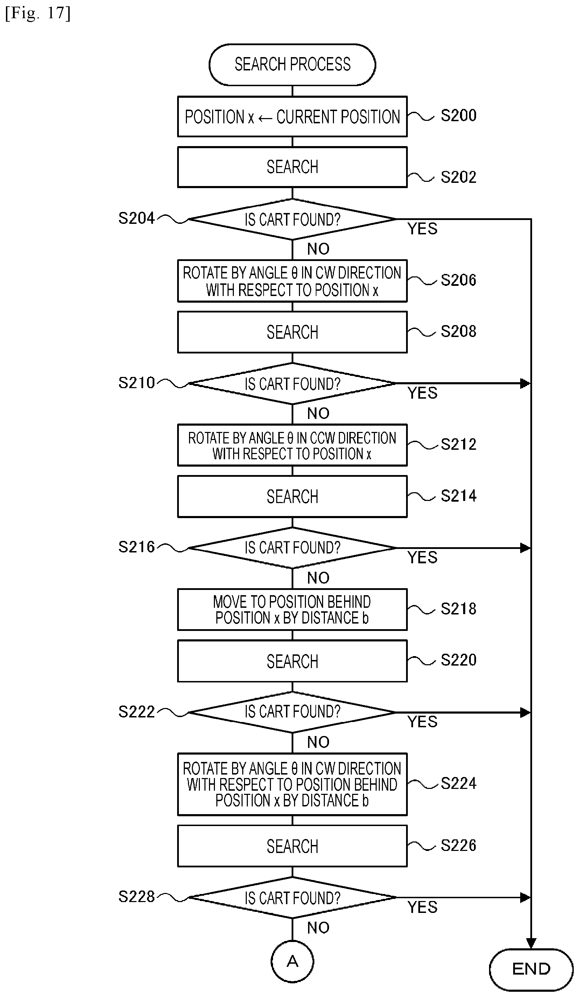

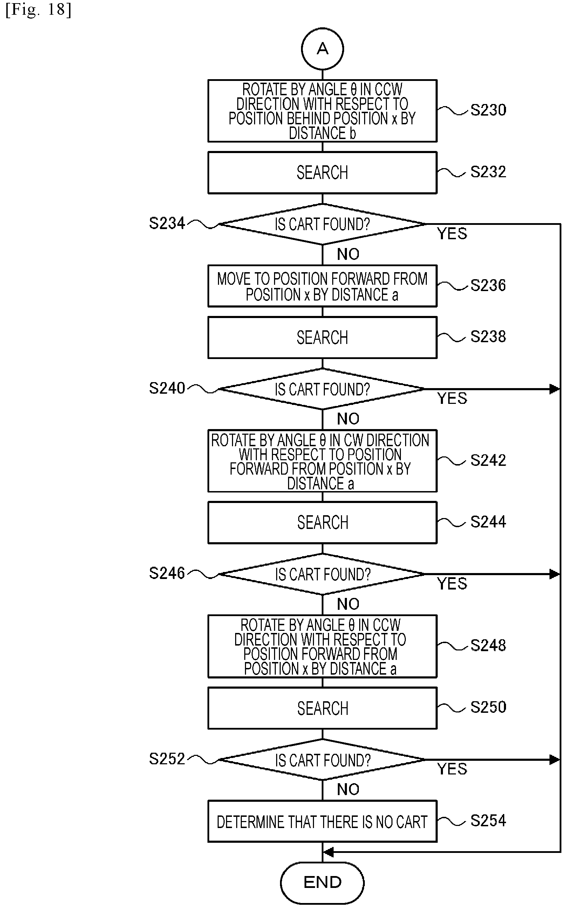

Next, details of the cart search process in S104 will be described. Figs. 17 and 18 are flowcharts illustrating an example of the cart search process.

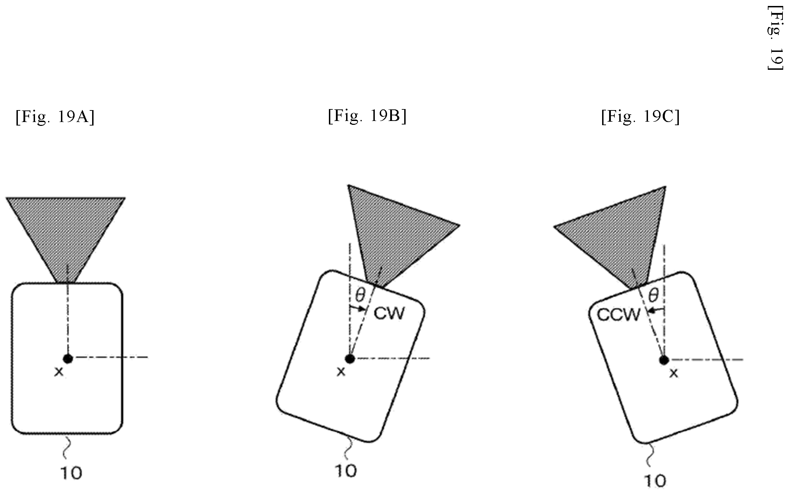

In the cart search process, control section 40 first sets the current position as position x (S200), and searches for caged cart 100 by using camera section 51 in front of position x (S202, Fig. 19A). Caged cart 100 is searched for by capturing an image of an area forward of vehicle body portion 11 at position x by using camera section 51 and processing the captured image to recognize marker M. When the recognition of marker M succeeds, control section 40 determines that caged cart 100 can be found (YES in S204), and when the recognition of marker M fails, control section 40 determines that caged cart 100 cannot be found (NO in S204). When it is determined that caged cart 100 is found (YES in S204), control section 40 ends the cart search process.

When it is determined that caged cart 100 cannot be found (NO in S204), control section 40 then moves to a position rotated by angle θ in a clockwise (CW) direction with respect to position x (S206), and searches for caged cart 100 by using camera section 51 (S208, Fig. 19B). Caged cart 100 is searched for, for example, by capturing multiple images by using camera section 51 while rotating in the clockwise direction, processing each captured image, and recognizing marker M for each image. Then, control section 50 determines that caged cart 100 can be found when the recognition of marker M succeeds in any of the images (YES in S210), and determines that caged cart 100 cannot be found when the recognition of marker M fails in any of the images (NO in S210). When it is determined that caged cart 100 can be found (YES in S210), control section 40 ends the cart search process.

When it is determined that caged cart 100 cannot be found (NO in S210), control section 40 then moves to a position rotated by angle θ in a counterclockwise (CCW) direction with respect to position x (S212), and searches for caged cart 100 by using camera section 51 (S214, Fig. 19C). Caged cart 100 is searched for, for example, by capturing multiple images by using camera section 51 while rotating in the counterclockwise direction, processing each captured image, and recognizing marker M for each image. Then, control section 50 determines that caged cart 100 can be found when the recognition of marker M succeeds in any of the images (YES in S216), and determines that caged cart 100 cannot be found when the recognition of marker M fails in any of the images (NO in S216). When it is determined that caged cart 100 can be found (YES in S216), control section 40 ends the cart search process.

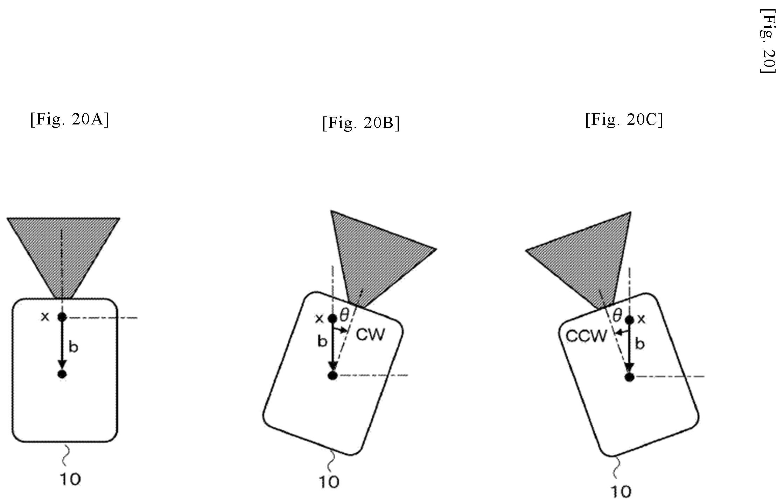

When it is determined that caged cart 100 cannot be found (NO in S216), control section 40 then moves to the position behind position x by distance b (S218), and searches for caged cart 100 by using camera section 51 in front of the position behind position x, similarly to S202 (S220, Fig. 20A). When it is determined that caged cart 100 can be found (YES in S222), control section 40 ends the cart search process. When it is determined that caged cart 100 cannot be found (NO in S222), control section 40 then moves to a position rotated by angle θ in the clockwise (CW) direction with respect to the position behind position x by distance b (S224), and searches for caged cart 100 by using camera section 51 similarly to S208 (S226, Fig. 20B). When it is determined that caged cart 100 can be found (YES in S228), control section 40 ends the cart search process. When it is determined that caged cart 100 cannot be found (NO in S228), control section 40 then moves to a position rotated by angle θ in the counterclockwise (CCW) direction with respect to the position behind position x by distance b (S230), and searches for caged cart 100 by using camera section 51 similarly to S214 (S232, Fig. 20C). When it is determined that caged cart 100 can be found (YES in S234), control section 40 ends the cart search process.

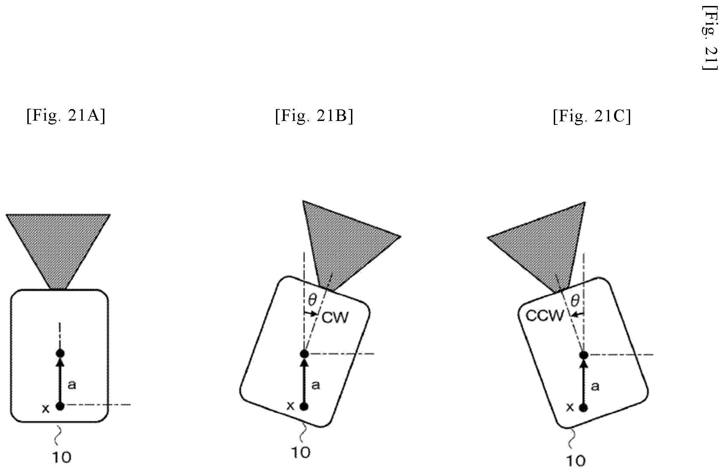

When it is determined that caged cart 100 cannot be found (NO in S234), control section 40 then moves to a position forward from position x by distance a (S236), and searches for caged cart 100 by using camera section 51 in front of the position forward from position x, similarly to S202 (S238, Fig. 21A). When it is determined that caged cart 100 can be found (YES in S240), control section 40 ends the cart search process. When it is determined that caged cart 100 cannot be found (NO in S240), control section 40 then moves to a position rotated by angle θ in the clockwise (CW) direction with respect to the position forward from position x by distance a (S242), and searches for caged cart 100 by using camera section 51 similarly to S208 (S244, Fig. 21B). When it is determined that caged cart 100 can be found (YES in S246), control section 40 ends the cart search process. When it is determined that caged cart 100 cannot be found (NO in S248), control section 40 then moves to a position rotated by angle θ in the counterclockwise (CCW) direction with respect to the position forward from position x by distance a (S250), and searches for caged cart 100 by using camera section 51 similarly to S214 (S252, Fig. 21C). When it is determined that caged cart 100 can be found (YES in S254), control section 40 ends the cart search process.

When it is determined that caged cart 100 cannot be found (NO in S254), control section 40 determines that there is no caged cart 100 (S254) and ends the cart search process.

As described above, in the present embodiment, since control section 40 searches for caged cart 100 at the search point at position x, the position rotated clockwise with respect to position x, and the position rotated counterclockwise with respect to position x, a search range can be expanded in the left-right direction, and caged cart 100 around position x can be more reliably found. In addition, control section 40 also searches for caged cart 100 at the search point at the position behind position x by distance b, the position rotated clockwise with respect to the position behind position x by distance b, and the position rotated counterclockwise with respect to the position behind position x by the distance b. As a result, the search range can be expanded in the front-rear and left-right directions. For example, when a part of vehicle body portion 11 is hidden under caged cart 100 and cannot be searched for by using camera section 51, caged cart 100 can be recognized by moving vehicle body portion 11 rearward. Further, control section 40 searches for caged cart 100 at the search point at the position forward from position x by distance a, the position rotated clockwise from the position forward from position x by distance a, and the position rotated counterclockwise from the position forward from position x by distance a. As a result, the search range can be expanded in the front-rear and left-right directions. For example, when the search range of camera section 51 does not slightly reach caged cart 100, caged cart 100 can be recognized by moving vehicle body portion 11 forward.

In the present embodiment, control section 40 searches for caged cart 100 by using camera section 51 in the front, the posture rotated clockwise, and the posture rotated counterclockwise at each of position x, the position behind position x by distance b, and the position forward from position x by distance a. However, control section 40 may search for caged cart 100 by using camera section 51 in the front, the posture rotated clockwise, and the posture rotated counterclockwise only at position x. Control section 40 may search for caged cart 100 by using camera section 51 only in the front at each of position x, the position behind position x by distance b, and the position forward from position x by distance a.

Here, a correspondence relationship between main elements of the embodiment and main elements of the present disclosure described in the claims will be described. That is, caged cart 100 of the present embodiment is an example of a cart of the present disclosure, vehicle body portion 11 is an example of a vehicle body, camera section 51 is an example of a detection section, control section 40 that executes the processing of S100 of the conveyance control routine is an example of an acquisition section, and control section 40 that executes the processing of S102 to S132 of the conveyance control routine is an example of a control section.

The present disclosure is not limited in any way to the embodiments described above, and it is needless to say that the present disclosure can be embodied in various aspects as long as the various aspects fall within the technical scope of the present disclosure.

For example, in the embodiment described above, when caged cart 100 cannot be found in any of the search lines, control section 40 ends the conveyance control routine, but when caged cart 100 are disposed in multiple different cart storage places, unmanned conveyance vehicle 10 may move to a second cart storage place and search for caged cart 100 when caged cart 100 cannot be found in a first cart storage place.

In the embodiment described above, unmanned conveyance vehicle 10 is configured to tow caged cart 100 by engaging coupling pin 34 of coupling section 30 with loading platform portion 101 of caged cart 100. However, unmanned conveyance vehicle 10 may lift and convey caged cart 100 using coupling section 30.

As described above, in a first unmanned conveyance vehicle of the present disclosure, when the search for the cart fails at the search start position, the unmanned conveyance vehicle repeats moving to the next search position among the multiple search positions and repeats the execution of the search process, until the search for the cart succeeds. By designating, as multiple search positions, positions at which there is a possibility that a cart is placed, it is possible to more reliably find a nearby cart even when the cart cannot be detected at the search start position.

In the unmanned conveyance vehicle of the present disclosure as described above, the control section may be configured to, when searching for the cart fails at the search start position, execute a re-search process of changing at least one of an orientation and a position of the vehicle body and searching for the cart by using the detection section, and when searching for the cart fails even in the re-search process, repeat causing the vehicle body to move to a next search position among the multiple search positions, executing the search process at the next search position, and in a case where searching for the cart fails at the next search position, executing the re-search process, until searching for the cart succeeds. In this way, it is possible to more reliably find a nearby cart without search omission.

In the unmanned conveyance vehicle of the present disclosure, the control section may change the orientation of the vehicle body in both forward and reverse rotation directions within a predetermined angle range and search for the cart by using the detection section, as the re-search process. In this way, the search range can be expanded in the left-right direction. In this case, the control section may change the position of the vehicle body forward in a traveling direction or rearward in the traveling direction, change the orientation of the vehicle body, both before and after changing the position of the vehicle body, in both the forward and reverse rotation directions within the predetermined angle range, and search for the cart by using the detection section, as the re-search process. In this way, the search range can be expanded in the front-rear and left-right directions.

In addition, in the unmanned conveyance vehicle of the present disclosure, the control section may change the position of the vehicle body forward in a traveling direction or rearward in the traveling direction and search for the cart by using the detection section, as the re-search process. In this way, the search range can be expanded in the front-rear direction.

In a second unmanned conveyance vehicle of the present disclosure, when searching for the cart at the search position fails, the re-search process of changing at least one of the orientation and the position of the vehicle body and searching for the cart by using the detection section is executed. As a result, even when the cart cannot be detected at the search position, it is possible to more reliably find the nearby cart.

### Industrial Applicability

The present disclosure can be applied to a manufacturing industry of an unmanned conveyance vehicle and the like.

### Reference Signs List

1: conveyance system, 10: unmanned conveyance vehicle, 11: vehicle body portion, 21: wheel, 22: drive motor, 30: coupling section, 31: lifting and lowering plate, 32, 33, 34: coupling pin, 35: lifting and lowering device, 36: contact detection sensor, 40: control section, 41: storage section, 41a: map information, 42: communication section, 51: camera section, 52, 53: sensor section, 54: light emitting section, 60: management device, 61: processing section, 62: storage section, 62a: map information, 62b: conveyance destination information, 63: communication section, 65: input section, 66: display section, 100: caged cart, 101: loading platform portion, 110: caster, L: cart storage place, M: marker, S: shelf, W: wall, F: obstacle.

## Claims

1. An unmanned conveyance vehicle for conveying a cart, the unmanned conveyance vehicle comprising:
a vehicle body;
a detection section provided in the vehicle body and configured to detect the cart within a predetermined detection range from the vehicle body;
an acquisition section configured to acquire multiple search positions including a search start position; and
a control section configured to cause the vehicle body to move to the search start position and then execute a search process of searching for the cart by using the detection section, and configured to, when searching for the cart fails at the search start position, repeat causing the vehicle body to move to a next search position among the multiple search positions and executing the search process at the next search position, until searching for the cart succeeds.

2. The unmanned conveyance vehicle according to Claim 1, wherein the control section is configured to execute, when searching for the cart fails at the search start position, a re-search process of changing at least one of an orientation and a position of the vehicle body and searching for the cart by using the detection section, and configured to, when searching for the cart fails even in the re-search process, repeat causing the vehicle body to move to a next search position among the multiple search positions, executing the search process at the next search position, and in a case where searching for the cart fails at the next search position, executing the re-search process, until searching for the cart succeeds.

3. The unmanned conveyance vehicle according to Claim 2, wherein the control section is configured to change the orientation of the vehicle body in both forward and reverse rotation directions within a predetermined angle range and search for the cart by using the detection section, as the re-search process.

4. The unmanned conveyance vehicle according to Claim 3, wherein the control section is configured to change the position of the vehicle body forward in a traveling direction or rearward in the traveling direction, change the orientation of the vehicle body, both before and after changing the position of the vehicle body, in both the forward and reverse rotation directions within the predetermined angle range, and search for the cart by using the detection section, as the re-search process.

5. The unmanned conveyance vehicle according to Claim 2, wherein the control section is configured to change the position of the vehicle body forward in a traveling direction or rearward in the traveling direction and search for the cart by using the detection section, as the re-search process.

6. An unmanned conveyance vehicle for conveying a cart, the unmanned conveyance vehicle comprising:
a vehicle body;
a detection section provided in the vehicle body and configured to detect the cart within a predetermined detection range from the vehicle body; and
a control section configured to cause the vehicle body to move to a search position that is predetermined and then execute a search process of searching for the cart by using the detection section, and configured to execute, in a case where searching for the cart fails at the search position, a re-search process of changing at least one of an orientation and a position of the vehicle body and searching for the cart by using the detection section.
